# EUROPEAN PATENT APPLICATION

(11) **EP 4 778 779 A1**
(43) Date of publication of application: **22.07.2026**
(21) Application number: 26150598.6
(22) Date of filing: 07.01.2026
(51) Int. Cl.: B60N 2/28, B60N 2/60, B60N 2/58

(54) **CHILD SEAT INSERTION-INTERFACE COVERING STRUCTURE**

(30) Priority: 15.01.2025 CN 202520099657 U
(71) Applicant: Adient (Chongqing) Automotive Components Co., Ltd., Liangjiang New Area, Chongqing 401122 (CN)
(72) Inventor: WANG, Panpan, Chongqing, Liangjiang New Area, 401122 (CN); GAO, Ming, Chongqing, Liangjiang New Area, 401122 (CN); LI, Qingmao, Chongqing, Liangjiang New Area, 401122 (CN); XIN, Yi, Chongqing, Liangjiang New Area, 401122 (CN)
(74) Representative: Liedtke & Partner Patentanwälte

(57) **Abstract**

The present invention discloses a child seat insertion-interface covering structure, including a seat body, wherein the seat body has a seat cushion (4) and a backrest (3) located at a rear end of the seat cushion (4), and a child seat insertion interface (2) is provided in a transition region between the backrest (3) and the seat cushion (4); a shielding flap (1) is provided on a lower front side of the backrest (3), an upper end of the shielding flap (1) is connected to the backrest (3), and a lower end of the shielding flap (1) is provided with a first connecting structure (11); the backrest (3) is provided with a second connecting structure (31) above the shielding flap (1); and a third connecting structure (41) is provided in the transition region between the backrest (3) and the seat cushion (4); both the second connecting structure (31) and the third connecting structure (41) are able to be detachably connected to the first connecting structure (11); the shielding flap (11) is able to flip up and down relative to the backrest (3); when the first connecting structure (11) is connected to the third connecting structure (41), the shielding flap (1) covers a front side of the child seat insertion interface (2) downwards; and when the first connecting structure (11) is connected to the second connecting structure (31), the shielding flap (1) is fixedly held in an upward-open state. The present invention has the beneficial effects of simple and convenient operation and no impact on seating comfort.

## Description

### Technical Field

The present invention relates to the technical field of designing seat components, and specifically to a child seat insertion-interface covering structure.

### Background Art

In the prior art, most car rear seats are provided with insertion interfaces for connecting child seats. To make the seat surface more aesthetically pleasing, these insertion interfaces are usually shielded by shielding flaps. When a child seat is installed, the shielding flap must be held in a raised state. A conventional installation method involves using one hand to raise the shielding flap and the other to install the child seat, which is inconvenient for installation. To make the installation of the child seat more convenient, most shielding flaps are now configured as follows:
The first configuration is that the shielding flap is attached to the seat by means of an adhesive strip, and needs to be removed when installing a child seat. This configuration is convenient for removing the shielding flap, but reinstalling it requires careful alignment of the adhesive strip, which is inconvenient for operation. If the adhesive strip is not installed properly, there will be a very noticeable gap between the shielding flap and the seat, resulting in an unsightly appearance. Furthermore, when a passenger is seated, the edge of the shielding flap is prone to being lifted and adhering to the passenger's clothing.

The second configuration is that the upper end of the shielding flap is fixedly connected to the seat, and a support strip is installed between the seat and the shielding flap, the support strip being made of rigid material. When it is necessary to hold the shielding flap in the raised state, the support strip is manually lifted and supported on the seat. This configuration is not convenient to operate.

### Summary of the Invention

In view of this, the present invention provides a child seat insertion-interface covering structure, an objective of which is to solve the problem of inconvenient operation of opening and closing existing shielding flaps.

To achieve the above objective, the technical solution of the present invention is as follows:
A child seat insertion-interface covering structure, comprising a seat body, wherein the seat body has a seat cushion and a backrest located at a rear end of the seat cushion, and a child seat insertion interface is provided in a transition region between the backrest and the seat cushion; a shielding flap is provided on a lower front side of the backrest, an upper end of the shielding flap is connected to the backrest, and a lower end of the shielding flap is provided with a first connecting structure; the backrest is provided with a second connecting structure above the shielding flap; and a third connecting structure is provided in the transition region between the backrest and the seat cushion; both the second connecting structure and the third connecting structure are able to be detachably connected to the first connecting structure; the shielding flap is able to flip up and down relative to the backrest; when the first connecting structure is connected to the third connecting structure, the shielding flap covers a front side of the child seat insertion interface downwards; and when the first connecting structure is connected to the second connecting structure, the shielding flap is fixedly held in an upward-open state.

With the above structure, the child seat interface can be switched between exposed and shielded states by simply flipping the shielding flap. The operation is simple, and the shielding flap is fixedly held in the open state when installing the child seat, making installation convenient.

Preferably, the first connecting structure, the second connecting structure and the third connecting structure are all magnetic connecting elements. With the above structure, the connection is convenient.

Preferably, hook-and-loop fasteners are used to detachably connect the second connecting structure to the first connecting structure, and the third connecting structure to the first connecting structure. With the above structure, the connection is simplified without affecting seating comfort.

Preferably, zippers are used to detachably connect the second connecting structure to the first connecting structure, and the third connecting structure to the first connecting structure. With the above structure, the connection is convenient.

Preferably, the third connecting structure is provided at the rear end of the seat cushion, or the third connecting structure is provided at a lower front end of the backrest. With the above structure, the child seat insertion interface may be provided within the installation gap between the backrest and the seat cushion, or embedded in the lower end of the backrest; the position of the third connecting structure adapts to the installation position of the child seat insertion interface.

Preferably, the shielding flap comprises a folding section, a support section and a connecting section in sequence from a connection position with the backrest, two adjacent sections are able to rotate relative to each other, and the first connecting structure is provided at the connecting section. With the above structure, the shielding flap is conveniently flipped.

Preferably, the lower front side of the backrest is provided with a recessed structure, and the shielding flap is arranged in the recessed structure. With the above structure, the front side of the shielding flap is on the same plane as the front side of the backrest of the car seat, preventing the shielding flap from protruding forward and affecting seating comfort.

Preferably, when the first connecting structure is connected to the second connecting structure, the shielding flap is tightly attached to a front side of the backrest. With the above structure, the structure is compact, and it is convenient to install the child seat.

Compared with the prior art, the present invention has the following beneficial effects:
1. With the child seat insertion-interface covering structure provided by the present invention, by flipping the shielding flap upwards, the shielding flap is attached and fixed tightly to the backrest of the car seat, keeping the child seat insertion interface exposed, which ensures that a user can use both hands to support the child seat for installation, making the operation simple and convenient.
2. The lower front side of the backrest of the car seat is provided with the recessed structure for installing the shielding flap, so that the front side of the shielding flap is on the same plane as the front side of the backrest of the car seat, which can prevent the shielding flap from protruding relative to the backrest of the car seat and affecting seating comfort.

### Brief Description of the Drawings

- Figure 1: is a schematic diagram of a child seat insertion interface 2 being located in an installation gap between a backrest 3 and a seat cushion 4;
- Figure 2: is a schematic diagram showing an installation position of a shielding flap 1;
- Figure 3: is a schematic diagram of a child seat insertion interface 2 being in a shielded state;
- Figure 4: is a schematic diagram of the child seat insertion interface 2 being in an exposed state; and
- Figure 5: is a schematic diagram of the child seat insertion interface 2 embedded in a lower end of the backrest 3.

### Detailed Description of the Embodiments

The present invention will be further described below with reference to the embodiments and drawings.

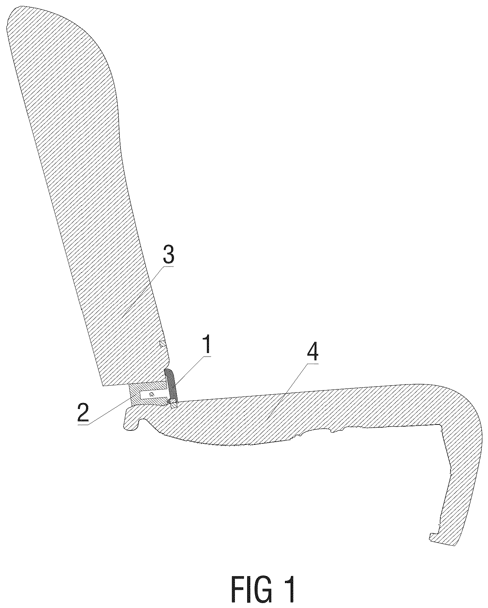

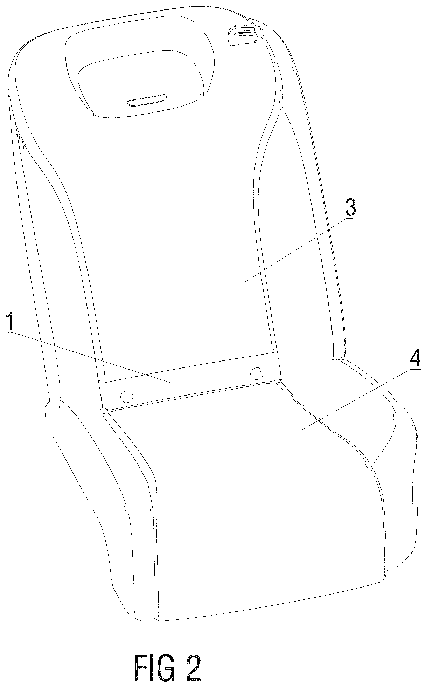

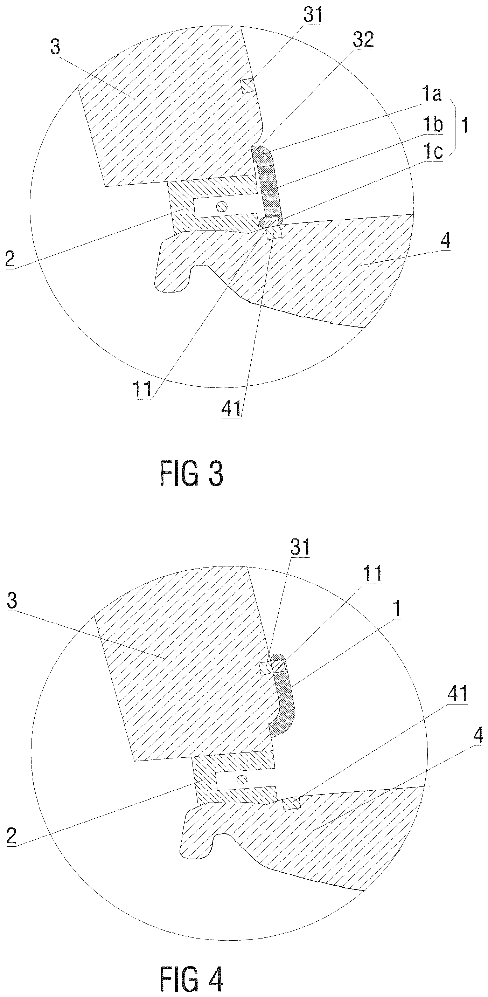

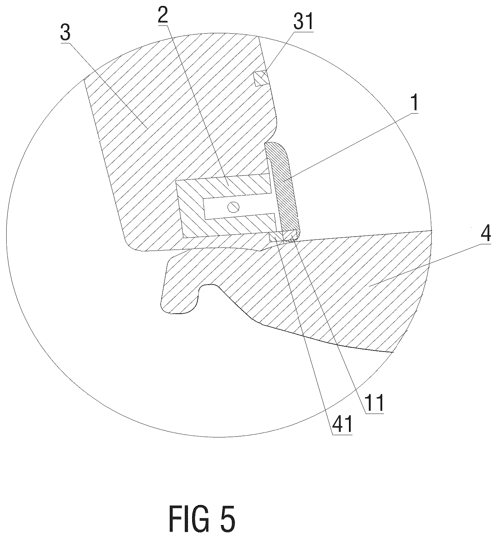

As shown in Figs. 1 and 2, a child seat insertion-interface covering structure includes a seat body. The seat body has a seat cushion 4, and a backrest 3 located at a rear end of the seat cushion 4. A child seat insertion interface 2 is provided in a transition region between the backrest 3 and the seat cushion 4. The child seat insertion interface 2 is either provided in an installation gap between the backrest 3 and the seat cushion 4 or tightly connected between the backrest 3 and the seat cushion 4. As shown in Fig. 5, the child seat insertion interface 2 is provided at a transition position between a lower end of the backrest 3 and the seat cushion 4. A shielding flap 1 for shielding the child seat insertion interface 2 is provided on a lower front side of the backrest 3. An upper end of the shielding flap 1 is connected to the backrest 3 and can be flipped up and down relative to the backrest 3. As shown in Fig. 3, the shielding flap 1 includes a folding section 1a, a support section 1b, and a connecting section 1c in sequence from a connection position with the backrest 3, and two adjacent sections can rotate relative to each other.

As shown in Fig. 4, a first connecting structure 11 is provided on the connecting section 1c of the shielding flap 1, the backrest 3 is provided with a second connecting structure 31 above the shielding flap 1, and a third connecting structure 41 is provided in the transition region between the backrest 3 and the seat cushion 4. When the child seat insertion interface 2 is provided in the installation gap between the backrest 3 and the seat cushion 4, the third connecting structure 41 is provided at a rear end of the seat cushion 4. As shown in Fig. 5, when the child seat insertion interface 2 is embedded in the lower end of the backrest 3, the third connecting structure 41 is provided at the lower front end of the backrest 3. Both the second connecting structure 31 and the third connecting structure 41 can be detachably connected to the first connecting structure 11. When the first connecting structure 11 is connected to the third connecting structure 41, the shielding flap 1 covers the front side of the child seat insertion interface 2 downwards. When the first connecting structure 11 is connected to the second connecting structure 31, the shielding flap 1 is fixedly held in an upward-open state.

In this embodiment, the first connecting structure 11, the second connecting structure 31, and the third connecting structure 41 are all magnetic connecting elements; or hook-and-loop fasteners or zippers are used to detachably connect the second connecting structure 31 to the first connecting structure 11, and the third connecting structure 41 to the first connecting structure 11.

As shown in Fig. 3, the lower front side of the backrest 3 is provided with a recessed structure 32, and the shielding flap 1 is arranged in the recessed structure 32. When the shielding flap 1 is in a shielding state, the front side of the shielding flap 1 is on the same plane as the front side of the backrest 3, which can prevent the shielding flap 1 from protruding relative to the backrest and affecting a user's seating comfort.

As shown in Figs. 3 and 4, in a normal state, when the shielding flap 1 shields the child seat insertion interface 2, the first connecting structure 11 is connected to the third connecting structure 41. When a child seat is installed, the shielding flap 1 is flipped upwards, and the first connecting structure 11 is connected to the second connecting structure 31. The shielding flap 1 is fixedly held in an upward-open state to expose the child seat insertion interface 2. The connection is simple and the operation is convenient, allowing the user to install the child seat with both hands. Furthermore, the transition region between the recessed structure 32 and the backrest 3 is configured to be arc-shaped, allowing the shielding flap 1 to be tightly attached to the front side of the backrest 3 of the vehicle seat, facilitating the installation of the child seat.

Finally, it should be noted that the above descriptions are only preferred embodiments of the present invention. In light of the teachings of the present invention, those of ordinary skill in the art can make various similar modifications without departing from the spirit and scope of the present patent application and its claims. Such modifications are all encompassed within the scope of protection of the present patent application.

### List of References

- 1: shielding flap
- 1a: folding section
- 1b: support section
- 1c: connecting section
- 2: child seat insertion interface
- 3: backrest
- 4: seat cushion
- 11: first connecting structure
- 31: second connecting structure
- 32: recessed structure
- 41: third connecting structure

## Claims

1. A child seat insertion-interface covering structure, comprising a seat body,
wherein the seat body has a seat cushion (4) and a backrest (3) located at a rear end of the seat cushion (4), and a child seat insertion interface (2) is provided in a transition region between the backrest (3) and the seat cushion (4),
wherein: a shielding flap (1) is provided on a lower front side of the backrest (3), an upper end of the shielding flap (1) is connected to the backrest (3), and a lower end of the shielding flap (1) is provided with a first connecting structure (11); the backrest (3) is provided with a second connecting structure (31) above the shielding flap (1); and a third connecting structure (41) is provided in the transition region between the backrest (3) and the seat cushion (4); both the second connecting structure (31) and the third connecting structure (41) are able to be detachably connected to the first connecting structure (11);
the shielding flap (1) is able to flip up and down relative to the backrest (3); when the first connecting structure (11) is connected to the third connecting structure (41), the shielding flap (1) covers a front side of the child seat insertion interface (2) downwards; and when the first connecting structure (11) is connected to the second connecting structure (31), the shielding flap (1) is fixedly held in an upward-open state.

2. The child seat insertion-interface covering structure as claimed in claim 1, wherein: the first connecting structure (11), the second connecting structure (31) and the third connecting structure (41) are all magnetic connecting elements.

3. The child seat insertion-interface covering structure as claimed in claim 1, wherein: hook-and-loop fasteners are used to detachably connect the second connecting structure (31) to the first connecting structure (11), and the third connecting structure (41) to the first connecting structure (11).

4. The child seat insertion-interface covering structure as claimed in claim 1, wherein: zippers are used to detachably connect the second connecting structure (31) to the first connecting structure (11), and the third connecting structure (41) to the first connecting structure (11).

5. The child seat insertion-interface covering structure as claimed in one of the preceding claims, wherein: the third connecting structure (41) is provided at the rear end of the seat cushion (4), or the third connecting structure (41) is provided at a lower front end of the backrest (3).

6. The child seat insertion-interface covering structure as claimed in one of the preceding claims, wherein: the shielding flap (1) comprises a folding section (1a), a support section (1b) and a connecting section (1c) in sequence from a connection position with the backrest (3), two adjacent sections are able to rotate relative to each other, and the first connecting structure (11) is provided at the connecting section (1c).

7. The child seat insertion-interface covering structure as claimed in one of the preceding claims, wherein: the lower front side of the backrest (3) is provided with a recessed structure (32), and the shielding flap (1) is arranged in the recessed structure (32).

8. The child seat insertion-interface covering structure as claimed in one of the preceding claims, wherein: when the first connecting structure (11) is connected to the second connecting structure (31), the shielding flap (1) is tightly attached to a front side of the backrest (3).
